# EUROPEAN PATENT SPECIFICATION

(11) **EP 2 776 523 B1**
(45) Date of publication and mention of the grant of the patent: **20.07.2016**
(21) Application number: 11875545.3
(22) Date of filing: 09.11.2011
(51) Int. Cl.: C09G 1/02, C08L 33/02

(54) **ADDITIVE MIXTURE AND COMPOSITION AND METHOD FOR POLISHING GLASS SUBSTRATES**
ADDITIVMISCHUNG UND ZUSAMMENSETZUNG DAMIT SOWIE VERFAHREN ZUM POLIEREN VON GLASSUBSTRATEN
MÉLANGE D'ADDITIFS, ET COMPOSITION ET PROCÉDÉ DE POLISSAGE DE SUBSTRATS DE VERRE

(43) Date of publication of application: 17.09.2014
(73) Proprietor: Rhodia Operations, 75009 Paris (FR)
(72) Inventor: GONG, Qiang, Shanghai 201108 (CN); HUANG, Aimin, Shanghai 201108 (CN)
(74) Representative: Senninger, Thierry
(86) International application number: PCT/CN2011/082005
(87) International publication number: WO 2013/067696

(56) References cited:
- WO-A2-2004/106455
- CN-A- 1 084 196
- CN-A- 1 084 196
- CN-A- 1 396 220
- CN-A- 1 396 220
- CN-A- 1 550 531
- CN-A- 1 550 531
- CN-A- 1 580 144
- CN-A- 1 580 144
- CN-A- 1 872 920
- CN-A- 1 872 920
- US-A1- 2007 269 987
- US-A1- 2007 269 987
- US-B1- 6 221 119

## Description

### FIELD OF THE INVENTION

The present invention relates to an additive mixture and a polishing composition used for polishing the thin film transistor (TFT) or super twisted nematic (STN) glass substrate for liquid crystal display, optical glass substrate, glass hard disk substrate, quartz glass and the like. The present invention further relates to a method for polishing a glass substrate using said polishing composition.

### BACKGROUND OF THE INVENTION

The high-precision polishing becomes important more and more in the field of electronics such as a glass substrate for magnetic disc, a glass substrate for liquid crystal display such as thin film transistor (TFT) LCD or twisted nematic (TN) LCD, a color filter for liquid crystal TV, an optical glass for lens and a glass substrate for photomask.

Especially it is eagerly desired to provide a mirror-polished surface with a high flatness, an extremely reduced surface roughness, and a minimized number of minute scratches and minute pits. Thus, it is required to polish surface of substrates with highly enhanced precision.

For surface polishing with an abrasive composition, both of high-precision surface polishing performance and high rate of polishing are required.

Various proposals have been made to enhance the rate of polishing. US 2005/0287931 A1 discloses a polishing slurry, which comprises an abrasive and an anionic surfactant and a nonionic surfactant and has a pH value of at least 11. However, the surface precision is still insufficient for certain applications.

Thus, there is still a need to develop a polishing composition with improved polishing performance.

### SUMMARY OF THE INVENTION

In order to solve the foregoing problem, the present inventors made extensive and intensive investigations and surprisingly found a polishing composition which can enhance the polishing rate and improve surface smoothness. The subject-matter of the present invention is defined in claims 1-5 as attached.

As an aspect, the present invention relates to an additive mixture comprising a polyacrylate salt, an acid ester, and a defoamer agent.

As another aspect, the present invention relates to a polishing composition for polishing a glass substrate, comprising the additive mixture according to the present invention and an abrasive.

As yet another aspect, the present invention relates to a method for polishing a glass substrate, comprising polishing the surface of a glass substrate using the polishing composition

### DETAILED DESCRIPTION OF THE INVENTION

Unless otherwise indicated, the term "polyacrylate salt" in the present invention means a salt of polyacrylate including but not limited to, sodium polyacrylate, potassium polyacrylate, ammonium polyacrylate, and calcium polyacrylate.

In general, a polishing composition does not meet a satisfactory level for both surface smoothness and polishing rate. Therefore, it is highly significant to provide a means that is capable of manufacturing a substrate having excellent surface qualities at a high polishing rate, in other words, a means that can meet a satisfactory level for both economic advantage and surface smoothness.

The present invention relates to an additive mixture which can be used to produce a polishing composition for a glass substrate which is capable of manufacturing a substrate having excellent qualities at a high polishing rate, a polishing composition and a method for polishing a glass substrate.

According to the present invention, a polishing composition for a glass substrate that is capable of manufacturing a substrate having excellent surface qualities at a high polishing rate, in other words, a polishing composition for a glass substrate that can meet a satisfactory level for both economic advantage and surface smoothness, and a method for polishing a glass substrate can be provided.

These and other advantages of the present invention will be apparent from the following description.

### Additive Mixture

The present invention provides an additive mixture, comprising a polyacrylate salt, an acid ester, a defoamer agent and an optional liquid medium.

According to some certain embodiments, the polyacrylate salt has a weight average molecular weight of less than 12,000, preferably, less than 10,000, and more preferably, in a range from 3000 to 5000.

According to some certain embodiments, the polyacrylate salt is selected from the group consisting of sodium polyacrylate, potassium polyacrylate, ammonium polyacrylate, and calcium polyacrylate.

According to some certain embodiments, the amount of the polyacrylate salt is from 10 to 70 mass%, preferably 30-50 mass%, of the total mass of the polyacrylate salt, the acid ester and the defoamer agent.

The acid ester is selected from phosphoric acid esters.

According to some certain embodiments, the amount of the acid ester is from 3 to 25 mass%, preferably from 5 to 10 mass%, of the total mass of the polyacrylate salt, the acid ester and the defoamer agent. When the additive mixture of the present invention comprises a liquid medium, the total amount of polyacrylate salt, the acid ester and the defoamer agent may be from 20% to 100% based on the total mass of the additive mixture.

According to some certain embodiments, the defoamer agent is selected from the group consisting of siloxylated polyethers, mineral oil, polysiloxanes, modified polysiloxane copolymer and the mixture thereof.

According to some certain embodiments, the amount of the defoamer agent is from 20 to 85 mass%, preferably from 40 to 60 mass%, of the total mass of the polyacrylate salt, the acid ester and the defoamer agent.

Although the additive mixture of the present invention can be comprised of the polyacrylate salt, the acid ester and the defoamer agent, it can further comprise other components including, such as, for example, liquid medium as solvent, surfactants or other functional components. According to some certain embodiments, the additive mixture further comprises a liquid medium. Preferably, water is used as the liquid medium. As the water used in the present invention, ion-exchanged water, distilled water, ultrapure water or the like can be favorably used. When the additive mixture of the present invention comprises a liquid medium, the amount of liquid medium may be from 0% to 80% based on the total mass of the additive mixture.

The additive mixture of the present invention can be prepared by mixing each of the above-mentioned components by a known method. Here, the concentration of each of the above-mentioned components may be any of a concentration during, the preparation and a concentration upon use.

### Using method of additive mixture and Polishing Composition

The present invention provides a polishing composition for polishing a glass substrate, comprising the additive mixture according to the present invention and an abrasive.

According to some certain embodiments, the amount of the abrasive is from 1 to 30 mass% with respect to the total mass of the polishing composition.

According to some certain embodiments, the abrasive is a cerium-containing abrasive. Preferably, the cerium-containing abrasive is selected from the group consisting of cerium oxide, lanthanum-cerium oxide, lanthanum-cerium-praseodymium oxide, lanthanum-cerium-praseodymium-neodymium oxide or other doped cerium oxides.

According to some certain embodiments, the amount of the polyacrylate salt is from 0.01 to 1.4 mass%, preferably 0.25-1 mass% with respect to the total mass of the polishing composition.

According to some certain embodiments, the amount of the acid ester is from 0.003 to 0.5 mass%, preferably from 0.01 to 0.1 mass% with respect to the total mass of the polishing composition.

According to some certain embodiments, the amount of the defoamer agent is from 0.02 to 1.7 mass%, preferably from 0.4 to 1 mass% with respect to the total mass of the polishing composition.

According to some certain embodiments, the polishing composition further comprises a pH regulator. Preferably, the pH regulator is selected from the group consisting of organic acid, inorganic acid, organic alkali and inorganic alkali. The polishing composition of the present invention has a pH of from 6 to 12, preferably from 7 to 9, from the viewpoint of increasing polishing rate. The pH can be adjusted depending on the content of an acid or an alkali. Preferably, an acid was used to adjust pH value. The acid includes an inorganic acid and an organic acid. The inorganic acid includes hydrochloric acid, nitric acid, sulfuric acid, phosphoric acid, a polyphosphoric acid, amide sulfuric acid, and the like. Also, the organic acid includes a carboxylic acid, an organic phosphonic acid, an amino acid, and the like. The carboxylic acid includes, for example, a monocarboxylic acid such as acetic acid, glycolic acid, and ascorbic acid; a dicarboxylic acid such as oxalic acid and tartaric acid; a tricarboxylic acid such as citric acid. The organic phosphoric acid includes 2-aminoethylphosphonic acid,
1-hydroxyethylidene-1,1-diphosphonic acid (HEDP),
aminotri(methylenephosphonic acid),
ethylenediaminetetra(methylenephosphonic acid),
diethylenetriaminepenta(methylenephosphonic acid), and the like. In addition, the amino acid includes glycine, alanine, and the like. Among them, the inorganic acid, the carboxylic acid, and the organic phosphonic acid are preferable, from the viewpoint of reducing scratches. For example, hydrochloric acid, nitric acid, sulfuric acid, phosphoric acid, a polyphosphoric acid, glycolic acid, oxalic acid, citric acid, HEDP, aminotri(methylenephosphonic acid),
ethylenediaminetetra(methylenephosphonic acid), or
diethylenetriaminepenta(methylenephosphonic acid) is suitably used. These acids for adjusting pH may be used alone or in admixture of two or more kinds.

According to some certain embodiments, the composition further comprises a liquid medium. The additive mixture of the present invention can be made into polishing slurry under agitation. In the produced polishing slurry, the polishing abrasive is dispersed in liquid medium. The amount of liquid medium depends on the intended applications. However, the additive mixture can be partially diluted with liquid medium and further diluted with liquid medium before use in many cases, from the viewpoint of economic advantages.

According to some certain embodiments, the liquid medium may be selected from the group consisting of water and organic solvents. Preferably, the liquid medium is an organic solvent selected from the group consisting of alcohol, acetone and tetrahydrofuran (THF). The liquid medium may be commercial polishing liquid composition.

According to some certain embodiments, water is used as the liquid medium. As the water used in the present invention, ion-exchanged water, distilled water, ultrapure water or the like can be favorably used.

The liquid medium may be contained in an amount of preferably from 70 to 99% by weight, more preferably from 80 to 95% by weight, from the viewpoint of maintaining fluidity of the polishing composition and increasing polishing rate.

The polishing composition of the present invention can be prepared by mixing each of the above-mentioned components by a known method. Here, the concentration of each of the above-mentioned components may be any of a concentration during, the preparation and a concentration upon use. The polishing composition is usually prepared as a concentrate and diluted upon use in many cases, from the viewpoint of economic advantages.

### Polishing Process

The present invention provides a method for polishing a glass substrate, comprising polishing the surface of a glass substrate using the polishing composition according to the present invention.

Since the polishing composition of the present invention is used in the step of polishing a glass substrate, an economically advantageous polishing rate can be realized and a polished substrate is imparted with excellent surface smoothness, and whereby a high-quality glass substrate having excellent surface properties can be manufactured economically.

The mechanism for reducing surface roughness on a substrate by using the polishing composition of the present invention is not elucidated, but is presumably as follows. A steric effect caused by adsorption of the polyacrylate salt, acid ester, and defoamer agent contained in the polishing composition on the surface of abrasive grains and/or polishing debris leads to the reduction of surface roughness by dispersion of the absorbed substances.

One of the features of the method for polishing a glass substrate of the present invention resides in that the method includes the step of polishing a substrate to be polished with a polishing load of from 2.5 to 15 kPa while allowing the above-mentioned polishing composition to be present between a polishing pad and the substrate to be polished (hereinafter also referred to as "the polishing step A"). By using the method for polishing a glass substrate having the feature, a glass substrate having an excellent surface smoothness can be obtained at an economically advantageous polishing rate.

A process for polishing in the polishing step A includes a polishing process using a polishing machine. Specifically, the polishing process includes the steps of putting a substrate to be polished held with a carrier between polishing platens to which a polishing pad is attached, feeding the polishing composition of the present invention between the polishing pad and the substrate to be polished, and moving the polishing platens and/or the substrate to be polished, while applying a given pressure, thereby polishing the substrate to be polished while contacting with the polishing composition of the present invention.

The polishing machine for a glass substrate using the polishing composition of the present invention is not particularly limited, and a polishing machine comprising a jig (carrier, made of aramide or the like) for holding a substrate to be polished and a polishing cloth (a polishing pad) can be used.

The polishing load in the polishing step A is from 2.5 to 15 kPa, preferably from 2.5 to 15 kPa, from the viewpoint of increasing polishing rate and improving surface qualities.

### Glass Substrate

The glass substrate can be, for example, thin film transistor (TFT) or super twisted nematic (STN) glass substrate for liquid crystal display, optical glass substrate, glass hard disk substrate, quartz and like.

The shape for the substrate is not particularly limited. For example, those having shapes containing planar portions such as discs, plates, slabs and prisms, or shapes containing curved portions such as lenses can be also used. Among them, the polishing composition of the present invention is excellent in polishing those having the disc-shaped or plate-like objects to be polished.

The polishing composition according to the invention shows high improvement on polishing efficiency and enables to obtain a high polishing rate in polishing a glass substrate.

The following examples and comparative examples were offered to aid in the understanding of the present invention and are not to be construed as limiting the scope thereof. Unless otherwise indicated, all parts and percentages are by weight, and the molecular weight is weight average molecular weight (Mw).

### EXAMPLES

The materials used in the following examples were summarized in Table 1.

**Table 1 Materials for the additive mixtures of the examples**

| **Additive** | **Main component** | **Producer** | **Producing area** |
|---|---|---|---|
| SN-5027 | polyacrylate ammonium Mw∼6000 | Weifang Henghai | China |
| Rhodoline 226/40 | polyacrylate sodium Mw∼5000 | Rhodia | New zealand |
| Rhodoline 111 | polyacrylate sodium Mw∼10000 | Rhodia | China |
| Rhodoline 226/35 | polyacrylate sodium Mw∼4000 | Rhodia | New zealand |
| Rhodafac RS410 | phosphate ester | Rhodia | China |
| Rhodafac RS610 | phosphate ester | Rhodia | China |
| Rhodafac RE610 | phosphate ester | Rhodia | US |
| FB-50 | polysiloxanes | Dow corning | Germany |
| Rhodoline DF691 | mineral oil | Rhodia | China |
| BYK1660 | siloxylated polyethers | BYK | US |

### Process of polishing rate evaluation:

### Prepare polishing composition:

Abrasive was dispersed into water and stirred for 30 min, and add the additive mixture under agitation for more 30 min to form polishing slurry. A pH regulator was added to adjust pH value if necessary.

### Polishing condition:

Polishing test machine: LM-15, commercially available from Baikowski. Co. Ltd.
Polishing pad: LP66, commercially available from Universal Photonics Incorporated.
Rotational speed of platen: 90 r/min
Flow rate: 1 L/min
Polishing time period: 60 min
Polishing load: 10-15 kPa
Substrate: flat, size: 100mm*100mm

### Evaluation of Polished Substrate

### (1) Polishing Rate

Polishing rate (µm/min) was calculated from the weight loss of glass substrate as measured after and before polishing.

### (2) Surface quality

### a. Surface roughness (Ra)

Surface roughness (Ra) of a glass substrate surface was measured by an atomic force microscope (AFM type: Multimode Nanoscope IIIa)

### b. Surface Defect

Glass substrate surface was observed by visual inspection (reflection + transmission) under halogen lamp of 200,000 lux. Evaluation of surface defects was expressed according to the following three ratings.

Quality evaluation:
A: roughness: Ra<1nm in 10µm*10µm area or occurrence of pits was not observed to any appreciable extent and the surface state was good.
B: roughness: 1nm<Ra<3nm in 10µm*10µm or pits were observed to some extent and the polished substrate was practically acceptable.
C: roughness: Ra>3nm in 10µm*10µm or pits were observed and surface state was bad, and the polished substrate was not acceptable.

### Example 1

100g abrasive was dispersed into 396g water, and then additive mixture was added while keeping stirring for 30 min. The additive mixture was comprised of 1.00g SN-5027, 0.98g Rhodafac 226/40 and 2.0g FB-50. 10% nitric acid was used to adjust pH value from 10 to 7.2. The polishing result was evaluated according to above method. The abrasive is Cerox® 2822 from Rhodia Co. LTD.

### Comparative example 1

Same polishing condition as above example 1 except without additive mixture added.

### Example 2

75g abrasive was dispersed into 420g water, and then additive mixture was added while keeping stirring for 30 min. The additive mixture was comprised of 1.88g Rhodoline 226/40, 0.15g Rhodafac RE610 and 2.5g BYK1660. The polishing result was evaluated according to above method. The abrasive is SHOROX™ A10 from Showa Denko K.K.

### Comparative example 2

Comparative example 2 was the same as above example 2 except that no additive mixture was added.

### Example 3

50g abrasive was dispersed into 447g water, and then additive mixture was added while keeping stirring for 30 min. The additive mixture was comprised of 1.70g Rhodoline 226/40, 0.24g Rhodafac RE610 and 0.49g Rhodoline DF691. The polishing result was evaluated according to above method. The abrasive is SHOROX™ V3106 from Showa Denko K.K. SHOROX™ V3106 is commercial polishing slurry (diluted with DI water to 10% of abrasive concentration).

### Comparative example 3

Comparative example 3 was the same as above example 3 except that no additive mixture was added.

### Example 4

125g abrasive was dispersed into 371g water, and then additive mixture was added while keeping stirring for 30 min. The additive mixture was comprised of 0.39g Rhodoline 111, 0.20g Rhodafac RS610 and 3.16g BYK1660. The polishing result was evaluated according to above method. The abrasive was Cerox® 2815 from Rhodia Co. LTD.

### Comparative example 4

Comparative example 4 was the same as above example 4 except that no additive mixture was added.

### Example 5

25g abrasive was dispersed into 474g water, and then additive mixture comprised of 0.25g Rhodoline 226/35, 0.03 Rhodafac RS410 and Rhodoline DF691 was added while keeping stirring for 30 min. The polishing result was evaluated according to above method. The abrasive was Cerox® 1650 from Rhodia Co. LTD.

### Comparative example 5

Comparative example 5 was the same as above example 5 except that no additive mixture was added.

### Comparative Example 6

Comparative Example 6 was the same as above example 5 except that dodecyl sodium sulfate was used to replace sodium polyacrylate in the additive mixture.

### Comparative Example 7

Comparative Example 7 was the same as above example 5 except that no sodium polyacrylate was added in the additive mixture.

The polishing compositions and their properties of Examples 1-5 and Comparative examples 1-7 were summarized in the following Table 2.

**Table 2**

| | **Removal rate ratio** | **Surface quality** |
|---|---|---|
| **Example 1** | 1.15 | B |
| **Example 2** | 1.19 | A |
| **Example 3** | 1.15 | A |
| **Example 4** | 1.17 | A |
| **Example 5** | 1.07 | B |
| **Comp.EX.1** | / | B |
| **Comp.EX.2** | / | B |
| **Comp.EX.3** | / | A |
| **Comp.EX.4** | / | B |
| **Comp**.**EX**.**5** | / | C |
| **Comp.EX.6** | 0.95 | C |
| **Comp.EX.7** | 0.90 | C |

| | | |
|---|---|---|
| Note: 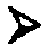 Removal rate ratios of example 1∼5 are ratios of the removal rates of examples 1-5 to the removal rates of comparative examples 1-5 (Example 1 vs. Comparative Example 1; Example 2 vs. Comparative Example 2; Example 3 vs. Comparative Example 3; Example 4 vs. Comparative Example 4; Example 5 vs. Comparative Example 5); removal rate ratios of comparative examples 6∼7 are ratios of the removal rates of comparative examples 6-7 to the removal rate of comparative example 5 (Comparative Example 6 vs. Comparative Example 5; Comparative Example 7 vs. Comparative Example 5). | | |

As can be seen from Table 2, the present polishing compositions of Examples 1-5 can substantially improve the polishing performance.

## Claims

1. A polishing composition for polishing a glass substrate, comprising an additive mixture and a cerium-containing abrasive, the additive mixture comprising a polyacrylate salt having a weight average molecular weight of less than 12,000, an acid ester and a defoamer; wherein the acid ester is a phosphoric acid ester, and wherein the polishing composition has a pH from 6-12.

2. The polishing composition according to claim 1, wherein the cerium-containing abrasive is selected from the group consisting of cerium oxide, lanthanum-cerium oxide, lanthanum-cerium-praseodymium oxide, or lanthanum-cerium-praseodymium-neodymium oxide.

3. The polishing composition according to claims 1 or 2, wherein the polyacrylate salt has a weight average molecular weight in the range from 3000 to 5000.

4. A method for polishing a glass substrate using the polishing composition according to any one of claims 1 to 3.

5. The method according to claim 4, wherein the glass substrate is selected from the group consisting of thin film transistor, super twisted nematic glass substrate, optical glass substrate, glass hard disk substrate, and quartz glass.

## Patentansprüche

1. Polierzusammensetzung zum Polieren eines Glassubstrats, umfassend eine Additivmischung und ein cerhaltiges Abrasivum, wobei die Additivmischung ein Polyacrylatsalz mit einem gewichtsmittleren Molekulargewicht von weniger als 12.000, einen Säureester und einen Entschäumer umfasst; wobei es sich bei dem Säureester um einen Phosphorsäureester handelt und wobei die Polierzusammensetzung einen pH-Wert von 6-12 aufweist.

2. Polierzusammensetzung nach Anspruch 1, wobei das cerhaltige Abrasivum aus der Gruppe bestehend aus Ceroxid, Lanthanceroxid, Lanthancerpraseodymoxid oder Lanthancerpraseodymneodymoxid ausgewählt ist.

3. Polierzusammensetzung nach Anspruch 1 oder 2, wobei das Polyacrylatsalz ein gewichtsmittleres Molekulargewicht im Bereich von 3000 bis 5000 aufweist.

4. Verfahren zum Polieren eines Glassubstrats unter Verwendung der Polierzusammensetzung nach einem der Ansprüche 1 bis 3.

5. Verfahren nach Anspruch 4, bei dem das Glassubstrat aus der Gruppe bestehend aus Dünnschichttransistor, superverdrillt-nematischem Glassubstrat, optischem Glassubstrat, Glasfestplattensubstrat und Quarzglas ausgewählt wird.

## Revendications

1. Composition de polissage pour polir un substrat en verre, comprenant un mélange d'additifs et un abrasif contenant du cérium, le mélange d'additifs comprenant un sel de polyacrylate ayant un poids moléculaire moyen en poids inférieur à 12 000, un ester d'acide et un agent antimousse ; dans laquelle l'ester d'acide est un ester d'acide phosphorique, et où la composition de polissage a un pH de 6 à 12.

2. Composition de polissage selon la revendication 1, dans laquelle l'abrasif contenant du cérium est choisi dans le groupe constitué de l'oxyde de cérium, l'oxyde de lanthane-cérium, l'oxyde de lanthane-cérium-praséodyme, ou l'oxyde de lanthane-cérium-praséodyme-néodyme.

3. Composition de polissage selon les revendications 1 ou 2, dans laquelle le sel de polyacrylate a un poids moléculaire moyen en poids dans la plage de 3000 à 5000.

4. Procédé de polissage d'un substrat en verre utilisant la composition de polissage selon l'une quelconque des revendications 1 à 3.

5. Procédé selon la revendication 4, dans lequel le substrat en verre est choisi dans le groupe constitué d'un transistor à couche mince, un substrat en verre nématique en hélice, un substrat en verre optique, un substrat de disque dur en verre, et un verre de quartz.
